(19) Europäisches Patentamt

European Patent Office

Office européen des brevets

(11) EP 1 715 446 A2

# (12) EUROPEAN PATENT APPLICATION

(43) Date of publication:
25.10.2006 Bulletin 2006/43

(51) Int Cl.:
*G06K 19/077* (2006.01)

(21) Application number: 06004776.8

(22) Date of filing: 08.03.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 25.03.2005 JP 2005088439

(71) Applicant: Toshiba TEC Kabushiki Kaisha
Tokyo 141-8664 (JP)

(72) Inventors:
• Sano, Kouichi
c/o Intellectual Property Division
Tokyo 141-8664 (JP)

• Murofushi, Nobuo
Intellectual Property Division
Tokyo 141-8664 (JP)
• Kiji, Yasuhito
c/o Intellectual Property Division
Tokyo 141-8664 (JP)
• Matsumoto, Yasuo
Intellectual Property Division
Tokyo 141-8664 (JP)

(74) Representative: Kramer - Barske - Schmidtchen
Radeckestrasse 43
81245 München (DE)

## (54) Case and radio tag reading system

(57) A radio tag (2) is attached to a specified position of an outer side surface (1a) of a case (1). A member (3) is arranged on an inner side opposing to the radio tag (2) to form a surface (3a) substantially parallel to the surface la to which the radio tag (2) is attached by the member (3). Further, a metal reflector (4) is attached on the surface (3a). Electromagnetic waves emitted from outside are supplied to the radio tag (2) and the electromagnetic waves have not consumed by the radio tag (2) are reflected from the reflector (4) to be supplied again to the radio tag (2).

FIG. 1

EP 1 715 446 A2

## Description

The present invention relates to a case having a radio tag and to a radio-tag-reading system for reading data from radio tags.

A radio tag of a type which has an antenna to transmit/receive in a non-contact manner by using an IC chip with data stored thereon and electromagnetic waves and which does not mount a battery has generally a degree of a communication distance of several cm to several tens of cm.

Such a radio tag is called non-contact IC tag. Jpn. Pat. Appln. KOKAI. Publication No. 2002-298106 discloses the use of a reflecting means such as a metal plate so as to elongate the communication distance. In other words, the reflecting means are oppositely disposed, by interposing a spacer, to the antenna which is connected to the IC chip. Further, the antenna which is connected to the IC chip is attached to one face opposing faces of a hermetically-sealed case and the reflecting means are attached to the other face in an opposite relation.

A tag of this configuration is used, attached to an inner surface of a case. A radio-tag-reading device can read data from the radio tag thus attached, without contacting the case.

A radio tag that has reflecting means provided on a spacer laid on the antenna is thick as a whole. A radio tag having an IC chip and an antenna on the surface that will contact a case when the tag is attached thereto, and having reflecting means on the opposite surface, is thick, too. When a radio tag of either type is attached to a case, with the reflecting means contacting a case, it will greatly protrude from the case.

Therefore, the projected radio tag has the high possibility to hit something during conveyance of the product and there is the problem that hitting of the radio tag to something causes the radio tag to be peeled off from the product. And the thick constituting body is inconvenient to use it by integrally attaching it on a printable label and by attaching the label to the case.

The present invention provides a case and a radio tag reading system which can elongate the communication distance by oppositely arranging the reflecting member to the radio tag and also does not extremely project the radio tag attached to an object to be attached such as a product from an outer side face of the object.

An object of the present invention is to provide a case in which a radio tag is attached on its outer side surface to form a surface substantially parallel to the outer side surface with the radio tag attached thereto on an inner side opposing to the radio tag and a reflective member is fixed on the formed surface.

According to the present invention, the reflective member is oppositely arranged to the radio tag to allow a communication distance to be elongated and also to prevent the attached radio tag from being extremely projected from the outer side face. Thereby, the radio tag can be stably held and accurately read out.

This summary of the invention does not necessarily describe all necessary features so that the invention may also be a sub-combination of these described features.

The invention can be more fully understood from the following detailed description when taken in conjunction with the accompanying drawings, in which:

FIG. 1 is an exemplary perspective view of a case regarding a first embodiment of the present invention;
FIG. 2 is an exemplary enlarged sectional view of an essential part of the first embodiment;
FIG. 3 is an exemplary waveform chart showing a traveling wave, its reflected wave and its composite wave at a wavelength $\lambda$ and a phase of 45°;
FIG. 4 is an exemplary waveform chart showing composite waves of traveling waves and reflected waves at wavelengths $\lambda$ and at phases of 0°, 45°, 90°, 135° and 180°, respectively;
FIG. 5 is an exemplary enlarged sectional view of an essential part of other embodiment of fixing a metal reflector in the first embodiment;
FIG. 6 is an exemplary perspective view of a case regarding a second embodiment of the present invention;
FIG. 7 is an exemplary view showing a configuration of a label for use in the second embodiment;
FIG. 8 is an exemplary block diagram showing a label issuing device for use in the second embodiment; and
FIG. 9 is an exemplary block diagram showing a configuration of a radio tag reading system regarding a third embodiment of the present invention.

Hereinafter, embodiments of the present invention will be described with reference to the drawings.

(First Embodiment)

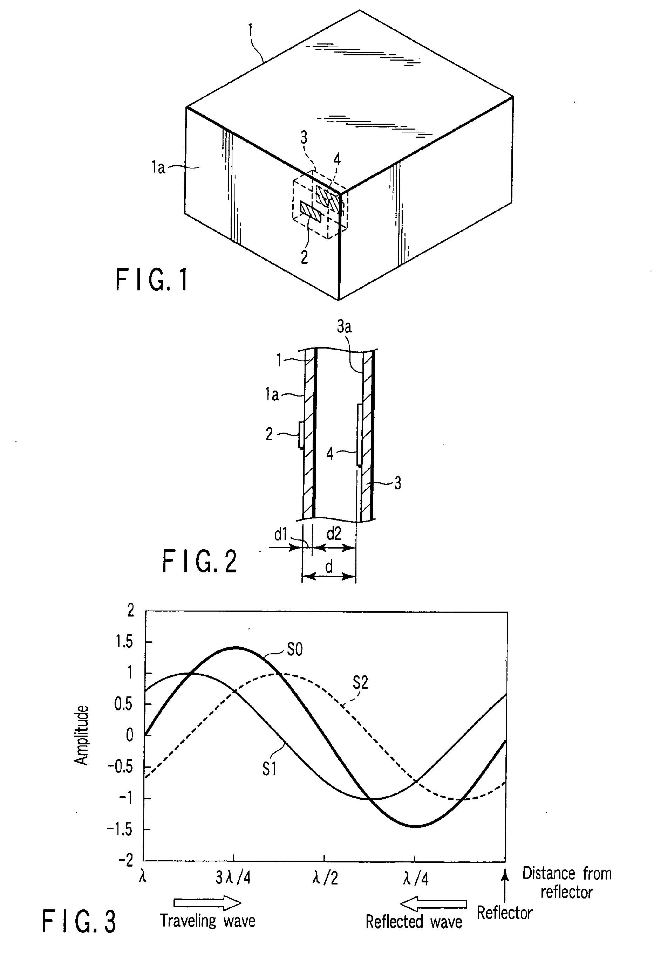

In FIG. 1, a case 1 contains a product, for example, a cardboard box. The case 1 is attached with a radio tag 2 at a prescribed position of an outer surface of one side part 1a of the case 1. The radio tag 2 has an IC chip storing data and an antenna to transmit/receive the data in an IC chip in a non-contact manner by using electromagnetic waves and is configured to obtain power from the electromagnetic waves without having to mount a battery.

The case 1 has a member 3 that is spaced apart from and opposed to the radio tag 1 provided on the side 1a. The member 3 has a surface 3a that is substantially parallel to the side 1a. The member 3 has been made by bending a part of the case 1, by cutting and pulling up a part of the case 1, or by bonding a member to the case 1.

A metal reflector 4, or reflective member, is mounted on the surface 3a of the member 3. The metal reflector 4 is, for example, a rectangular reflector. The reflector 4 may be attached to the surface 3a while the case 1 is being manufactured, or while a product is being placed in the case 1.

In terms of a positional relationship between the radio tag 2 and the reflector 4, the radio tag 2 is positioned at an almost center of the reflector 4 viewed from the arrival direction of the electromagnetic waves to the radio tag 2. Depending on the positional relationship, since the electromagnetic waves are reflected from the reflector 4 to arrive at the radio tag 2, the radio tag 2 can enhance reception efficiencies of the electromagnetic waves.

As shown in FIG. 2, a distance d between the radio tag 2 and the reflector 4 becomes a total of a thickness d1 of the outer side of the case 1 and a thickness d2 of an air layer. When a relative dielectric constant of the case 1 is set to $\varepsilon r$, and a wavelength of an electromagnetic wave to be used is set to $\lambda$, a wavelength of a material in the dielectric constant $\varepsilon r$ becomes $\lambda/\sqrt{\varepsilon r}$ equivalently, so that an effective distance d0 between the radio tag 2 and the reflector 4 is expressed by the following expression (1).

$$d0 = (d1 \times \sqrt{\varepsilon r}) + d2 \qquad (1)$$

In the configuration including the reflector 4, electromagnetic waves emitted from an external antenna are directly supplied to the radio tag 2, however, electromagnetic waves have not consumed by the radio tag 2 arrive at the reflector 4 and reflected to be supplied again to the radio tag 2.

A resolution $\Delta x$ of an electromagnetic wave perpendicular to an electromagnetic wave propagation direction is expressed by the following expression (2).

$$\Delta x = \lambda / (2\sin\theta) \geqq \lambda / 2 \qquad (2)$$

Accordingly, if a size of an outer shape of the reflector 4 is set larger than a circle of a diameter of 1/2 of the wavelength $\lambda$ of the electromagnetic wave, the reflector 4 can efficiently supply reflected electromagnetic waves to the radio tag 2.

FIG. 3 shows traveling wave S1 of the electromagnetic wave, a reflected wave S2 reflected from a reflector and its composite wave S0. The FIG. 3 shows a waveform when a reflector is positioned at a right end of a lateral axis of FIG. 3 and when a phase of the traveling wave S1 at a position distant from by one wavelength $\lambda$ from the reflector is 45°. A longitudinal axis of FIG. 3 indicates amplitude of the electromagnetic wave and the maximum amplitude of the traveling wave S1 is set to '1'.

The traveling wave S1 travels form the left to the right in FIG. 3 and when it achieves the reflector, its polarity is inverted. Then, next, the reflected wave travels as a reflected wave S2 from the right to the left in FIG. 3. A composite wave S0 is composed of the traveling wave S1 and the reflected wave S2 and increases its amplitude.

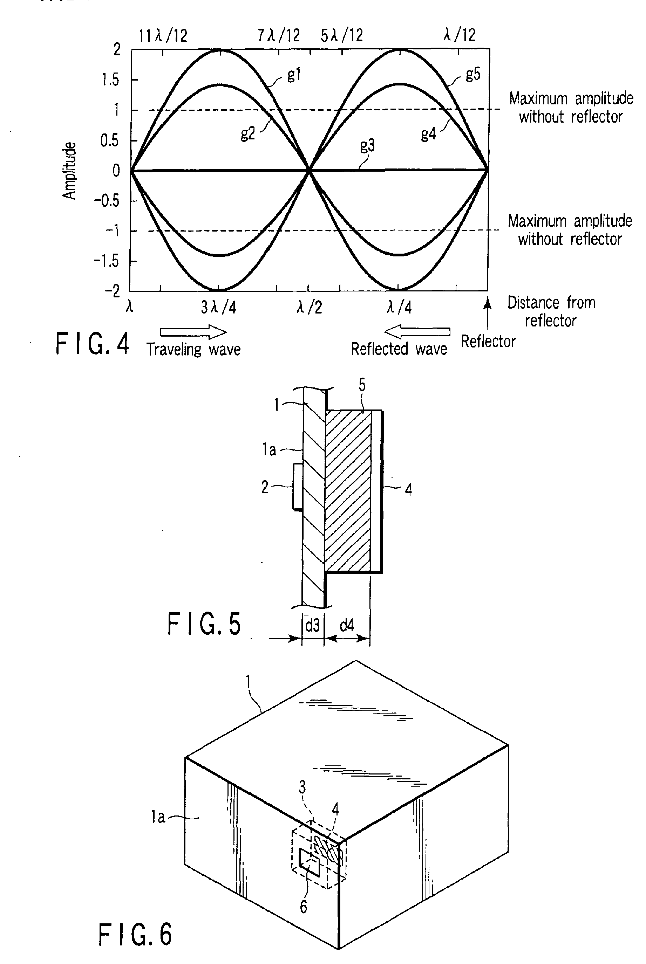

FIG. 4 shows a waveform chart showing the composite wave which changes temporally. Even in FIG. 4, as like FIG. 3, the reflector is positioned at the right end of the lateral axis and its left end is positioned distant from the reflector by one wavelength $\lambda$. The longitudinal axis of FIG. 4 indicates the amplitude of the electromagnetic wave.

A waveform g1 indicates a composite wave when the phase of the traveling wave is 0°. A waveform g2 indicates a composite wave when the phase of the traveling wave is 45°. A waveform g3 indicates a composite wave when the phase of the traveling wave is 90°. A waveform g4 indicates a composite wave when the phase of the traveling wave is 135°. A waveform g5 indicates a composite wave when the phase of the traveling wave is 180°.

The electromagnetic wave varies in phase as time from 0° to 45° and 90°. The time until the phase of the electromagnetic wave is varied from 0° to 360° is determined by the frequency of the electromagnetic wave.

As known from the waveform chart in FIG. 4, the position at which the amplitude of the composite wave becomes a maximum is a position away from the reflector by $\lambda/4$ or $3\lambda/4$. The maximum amplitude at the phase of 0° is twice the maximum amplitude '1' of the traveling wave. Magnitude of amplitude indicates magnitude of an electric field strength and the magnitude of the amplitude indicates a strength of the electric field strength.

That is, if the radio tag 2 is arranged at a position separated from the reflector 4 by $\lambda/4$ or $3\lambda/4$, the radio tag 2 can receive strong electromagnetic wave with a strong electric field strength. Accordingly, an expression $d0=\lambda/4$ or $d0=3\lambda/4$ is acceptable for setting of the effective distance d0.

FIG. 4 is a waveform chart showing composite waves within distances from the reflector 4 are up to the one wavelength λ, however, the composite waves are indicated with repetition of the waveforms up to the one wavelength λ even if the distance from the reflector 4 is longer than the one wavelength 1. Accordingly, the amplitude of the composite wave becomes maximum even at positions separated from the reflector 4 by a distance wherein an integer multiple of a half wavelength λ/2 is added to λ/4 and 3λ/4, such as 5λ/4, 7λ/4, 9λ/4 and 11λ/4. That is, the electric field strength becomes strong at the position separated from the reflector 4 by the odd number multiple of λ/4.

As mentioned above, the distance between the metal reflector 4 and the radio tag 2 is preferably set to the length of λ/4, however, if it is impossible to set to it, the distance may be set to not less than 3λ/4 or 5λ/4.

By setting the distance between the radio tag 2 and the metal reflector 4 disposed in the case 1 to the above-described relationship, the radio tag 2 can receive the strong electric field strength by external electromagnetic waves. Thereby, a radio tag reading device can surely write or read data to and from the radio tag 2.

Having described that the reflector 4 reflects electromagnetic waves without any loss in FIG. 3 and FIG. 4, even when there are losses in reflections, each amplitude of the composite waves is appeared at the position away from the reflector 4 by odd-number multiple of λ/4 as a maximal point at which the amplitude becomes maximum. The amplitude at this maximal point is smaller in comparison to the case in which there is no loss caused by the reflections.

Although the amplitude of the composite wave becomes maximal at the positions at which the distances between the reflector 4 and the radio tag 2 are odd-number multiple of λ/4, since the composite wave has become a sine wave, even when the positions shift to some degrees from the positions of the odd-number multiple of λ/4, the amplitude does not vary extremely. Therefore, if the radio tag 2 is placed near the position from which the distance to the reflector 4 is the odd-number multiple of λ/4, the radio tag 2 can receive the strong electric field strength by the external electromagnetic waves.

If the reflector 4 is not used, the electromagnetic wave appears as the traveling wave S1 shown in FIG. 3, so that the maximum amplitude of the electromagnetic wave is '1'. If the reflector 4 is used, the maximum amplitude of the composite wave g1 at the phase of the traveling wave of 0° is '2'. Then, the amplitude of the electromagnetic wave is '1' or more in a range from λ/12 to 5λ/12 or from 7λ/12 to 11λ/12, as illustrated in FIG. 4.

Therefore, in the case of use of the reflector 4, the radio tag 2 can receive the electromagnetic waves stronger than in the case of no use of the reflector 4 if the radio tag 2 is placed at a position distant from the reflector 4 in the range from λ/12 to 5λ/12 or from 7λ/12 to 11λ/12. The amplitudes of the electromagnetic wave are repeated periodically at every half wavelength λ/2.

Accordingly, when the radio tag 2 is arranged within the distance from the reflector 4 by λ/12 to 5λ/12, or arranged within the distance in which an integral multiple of λ/2 is added to the distance from the reflector 4 by λ/12 to 5λ/12, the radio tag 2 can receive stronger electromagnetic waves in comparison to the case of no use of the reflector 4.

By setting the distance between the radio tag 2 and the metal reflector 4 as described above, the amplitude of the reception wave of the radio tag 2 becomes strong, because the electromagnetic waves directly arrive to the radio tag 2 from the electromagnetic wave arrival direction and the electromagnetic waves reflected from the reflector 4 to arrive at the radio tag 2 strengthen with one another. Thereby, the radio tag reading device can lengthen the communication distance to the radio tag 2 in reading the data from the radio tag 2.

Only the radio tag 2 is attached on the outer surface of the one side part 1a of the case 1 and the radio tag 2 is not attached while being integrated with the reflector 4, so that the radio tag 2 does not extremely project from the outer surface of the one side part 1a. Therefore, a situation in which the radio tag 2 abuts on something to come off during conveyance of the case 1 is hardly generated.

Before something is placed in the case 1, the distance d between the radio tag 2 and the reflector 4 is set shorter than λ/12. This decreases the intensity of the electric field applied to the radio tag 2, preventing the data from being read from the radio tag 2.

In the aforementioned first embodiment, the member 3 is arranged on the inner side facing the radio tag 2 attached to the case 1 and the metal reflector 4 is fixed on the surface 3a of the member 3 substantially parallel to the outer face of the one side part 1a of the case 1 however the present invention is not limited to this first embodiment.

As shown in FIG. 5, the reflector 4 may be attached on the surface of the inner side of the case 1 through a spacer 5 made of material not containing moisture such as a synthetic resin.

In FIG. 5, by setting a thickness of the case 1 to d3, a relative dielectric constant to ε r1, a thickness of the spacer 5 to d4 and a relative dielectric constant to ε r2, the effective distance d0 between the radio tag 2 and the metal reflector 4 is represented as the following expression (3).

$$d0 = (d3 \times \sqrt{\varepsilon r1}) + (d4 \times \sqrt{\varepsilon r2}) \qquad (3)$$

Then, d0 should be set to an odd-number multiple of λ/4 or to its proximity.

Even when using such a spacer 5, the amplitude of the reception wave of the radio tag 2 becomes large, because the electromagnetic waves directly arrived at the radio tag 2 from the electromagnetic wave arrival direction and the electromagnetic waves reflected from the reflector 4 to arrive at the radio tag 2 strengthen with one another. Thereby, the radio tag reading device can elongate the communication distance to the radio tag 2 in reading the data from the radio tag 2.

(Second Embodiment)

The same units as those of the first embodiment will be put the same reference symbols as those of the first embodiment.

As FIG. 6 shows, a mark 6 is printed on the outer surface of the side 1a of the case 1, indicating the position at which a radio tag should be attached. The reflector 4 is attached to the member 3 disposed outside the case 1.

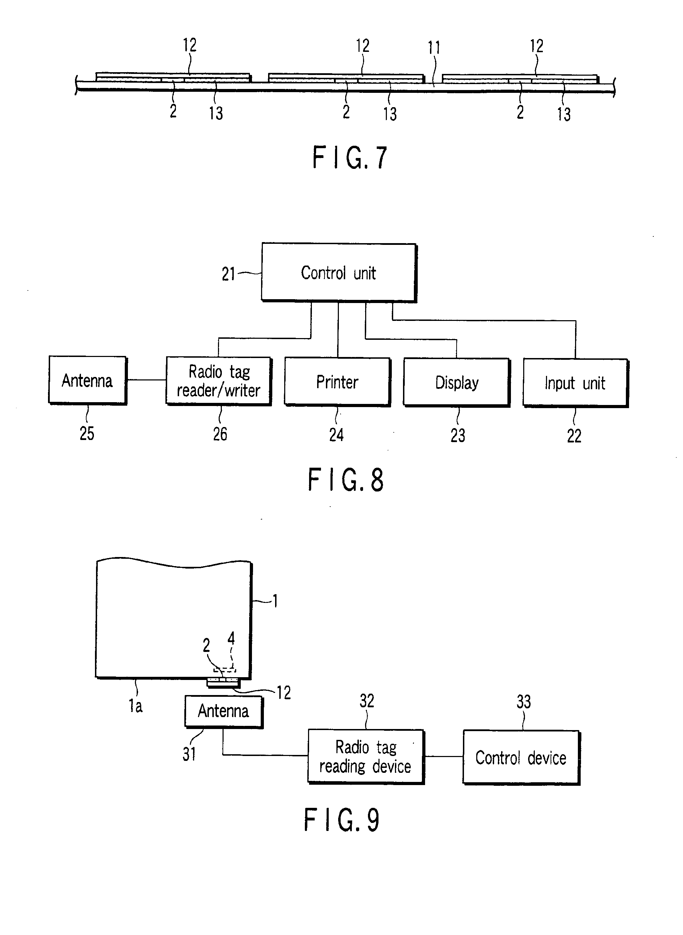

As shown in FIG. 7, with arranging a plurality of labels 12 on a pasteboard 11 with specified intervals, a label issuing device issues labels by printing letters on the labels.

Each label 12 on the pasteboard 11 attaches the radio tag 2 at a center on rear face of the label 12 and forms an adhesive layer 13 around the radio tag 2.

As shown in FIG. 8, the label issuing device has a control unit 21 having a microprocessor.

The control unit 21 respectively controls an input unit 22 having a keyboard, etc., a display 23 consisting of a liquid crystal display, a printer 24 for printing data on the label 12, and a radio tag reader/writer 26 for writing and reading data to and from the radio tag 2 via an antenna 25.

The issuing device sets the data to print on the label 12 and the data to write to the radio tag 2 by operating the input unit 22. The control unit 21 drives the printer 24 to print the set data to the label 12 on the pasteboard 11 to be conveyed. The issuing device drives the reader/writer 26 to write the data to the radio tag 2 attached on a rear surface of the printed label 12.

The printed label 12 is peeled off from the pasteboard 11 and attached to the outer surface of the one side part 1a of the case 1. At this time, the label 12 is attached so that the radio tag 2 attached on the rear surface is fitted to the mark 6 on the case 1.

In this above-described structure, even before a product is placed in the case 1 or even after the product is placed in the case 1 to close a lid thereof, an operator can attach the radio tag 2 to the case 1 together with the label 12. Thereby, the operator can enhance the degree of freedom in using the case 1 and easily treat the case 1.

With attaching the radio tag 2 so as to fit the mark 6 together with the label 12, the distance between the radio tag 2 and the metal reflector 4 is set, for example, in the rage of $\lambda/12$ to $5\lambda/12$, or preferably set to $\lambda/4$ or around $\lambda/4$. Thereby, the radio tag 2 can efficiently receive electromagnetic waves incoming externally. Accordingly, the radio tag reading device can elongate the communication distance to the radio tag 2 when reading the data from the radio tag 2.

In each aforementioned embodiment, having described about the case in which the reflector 4 is attached in the case 1 in advance, the present invention is not limited these embodiments. By displaying the attachment mark of the reflector 4 onto the surface 3a of the member 3 in advance, then the reflector 4 may be attached at this mark of attachment in housing the product in the case 1.

Each of the foregoing embodiments has described about the case of use of the metal reflector, however, the present invention is not limited these embodiments, and each of them may use a metal foil, a metal film, or a reflecting member made of material other than metal.

(Third Embodiment)

In a third embodiment, likewise the above-mentioned second embodiment, a radio tag reading system in which the case 1 attaches the label with the radio tag 2 attached thereto and uses the case 1 will be described. The same units as those of the forgoing embodiments will be put the same reference symbols.

As shown in FIG. 9, the case 1 attaches the label 12, the rear surface of which is attached with the radio tag 2, on the outer surface of the one side part 1a. The case 1 arranges the reflector 4 on the inner side of a site with the radio tag 2 attached thereto.

An antenna 31 of a radio tag reading device 32 closes to the radio tag 2 of the case 1 having the aforementioned structure and a control device 33 controls the radio tag reading device 32. The reading device 32 reads the data from the radio tag 2 via the antenna 31.

That is to say, the reading device 32 transmits the electromagnetic waves to the radio tag 2 from the antenna 31 to supply power. When receiving the electromagnetic waves, the radio tag 2 receives the power through the electromagnetic waves to drive an IC chip. The radio tag 2 then receives an instruction for reading from the reading device 32, reads out the data stored in the IC chip and transmits the data as electromagnetic waves to the antenna 31. The reading device 32 receives the electromagnetic waves from the radio tag 2 to read the data and transmits it to the control device 33. The control device 33 receives to manage the data from the reading device 32.

Inasmuch as the reflector 4 is arranged and the distance between the radio tag 2 and the metal reflector 4 is set to, for example, $\lambda/4$ or around $\lambda/4$, the reading device 32 can set the communication distance to the radio tag 2 long. Accordingly, when the antenna 31 is approached to the radio tag 2, the distance to the radio tag 2 can be sufficiently secured. Whereby, the operator can relatively easily perform an operation of reading the data from the radio tag 2.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A case (1) to which a radio tag (2) is to be attached, **characterized by** comprising:

   a side (1a) having an outer surface to which a radio tag (2) is attached; and
   an inner surface (3a) to which a reflecting member (4) is to be attached, said inner surface (3a) opposing the radio tag (2) and being substantially parallel to the outer surface.

2. The case according to claim 1, **characterized in that** the reflecting member (4) is attached to the inner surface (3a).

3. The case (1) according to claim 1 or 2, **characterized in that** the inner surface (3a) has a mark indicating a position at which the reflecting member (4) is to be attached.

4. The case (1) according to claim 1, 2 or 3, **characterized in that** the reflecting member (4) is metal plate, a spacer is provided on the inner surface (3a), and the metal plate is provided on the spacer.

5. The case (1) according to anyone of claims 1 to 4, **characterized in that** a distance $\Sigma$ dn$\sqrt{\varepsilon}$ rn between the radio tag (2) and the reflecting member (4) ranges from $\lambda/12$ to $5\lambda/12$ or ranges from ($\lambda/12$ + integral multiple of $\lambda/2$) to ($5\lambda/12$ + integral multiple of $\lambda/2$), where $\lambda$ is the wavelength of electromagnetic wave used, dn (n=1, 2, ...) is the thickness of at least one layer existing between the radio tag (2) and the reflecting member (4), and $\varepsilon$ rn (n=1, 2, ...) is a relative dielectric constant.

6. The case (1) according to claim 2, **characterized in that** the reflecting member (4) is larger than a circle having a diameter that is half the wavelength $\lambda$ of electromagnetic wave used.

7. The case (1) according to anyone of claims 1 to 6, **characterized in that** a distance $\Sigma dn\sqrt{\varepsilon rn}$ between the radio tag (2) and the reflecting member (4) is set shorter than one-twelfths (1/12) of the wavelength $\lambda$ of electromagnetic waves to avoid the radio tag from being read, where dn (n=1, 2, ...) is the total thickness of layers including an air layer, existing between the radio tag (2) and the reflecting member (4), and $\varepsilon$ rn (n=1. 2....) is a relative dielectric constant.

8. A case (1) to which a radio tag (2) is to be attached, **characterized by** comprising:

   a side (1a) having an outer surface which has a mark (6) indicating a position at which a radio tag (2) is to be attached; and
   an inner surface (3a) to which a reflecting member (4) is to be attached, said inner surface (3a) opposing the radio tag (2) and being substantially parallel to the outer surface.

9. The case (1) according to claim 8,
   **characterized in that** the reflecting member (4) is attached to the inner surface (3a).

10. The case (1) according to anyone of claim 8 or 9,
    **characterized in that** the inner surface (3a) has a mark indicating a position at which the reflecting member (4) is to be attached.

11. The case (1) according to claim 8, 9 or 10,

**characterized in that** the reflecting member (4) is metal plate, a spacer is provided on the inner surface (3a), and the metal plate is provided on the spacer (5).

12. The case (1) according to anyone of claims 8 to 11, **characterized in that** the reflecting member (4) is larger than a circle having a diameter that is half the wavelength λ of electromagnetic wave used.

13. A system **characterized by** comprising:

a label (12) including a data-printed layer and a radio tag (2) provided on the data-printed layer, said radio tag (2) having an antenna;
a case (1) having a side (1a) having an outer surface to which the label (12) is attached, and an inner surface to which a reflecting member (4) is attached and which is substantially parallel to the outer surface; and
a radio-tag reading device (32) which has an antenna (31) for receiving data from the radio tag (2).

F I G. 1

F I G. 2

F I G. 3

Amplitude

Distance from reflector

Traveling wave　　　Reflected wave　Reflector

8

**FIG. 4**

Traveling wave    Reflected wave  Reflector

**FIG. 5**

**FIG. 6**

FIG.7

FIG.8

Control unit 21

Antenna 25

Radio tag reader/writer 26

Printer 24

Display 23

Input unit 22

FIG.9

Antenna 31

Radio tag reading device 32

Control device 33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002298106 A